# EUROPEAN PATENT SPECIFICATION

(11) **EP 3 457 313 B1**
(45) Date of publication and mention of the grant of the patent: **27.11.2024**
(21) Application number: 17190979.9
(22) Date of filing: 13.09.2017
(51) Int. Cl.: G06T 7/80, G06V 20/40, G06V 40/20

(54) **METHOD AND APPARATUS FOR MAPPING A REFERENCE VIEW WITH A CAMERA IMAGE**
VERFAHREN UND VORRICHTUNG ZUR ABBILDUNG EINER REFERENZANSICHT MIT EINEM KAMERABILD
PROCÉDÉ ET APPAREIL DE MAPPAGE D'UNE VUE DE RÉFÉRENCE À L'AIDE D'UNE IMAGE DE CAMÉRA

(43) Date of publication of application: 20.03.2019
(73) Proprietor: EVS Broadcast Equipment SA, 4102 Seraing (BE)
(72) Inventor: Barnich, Olivier, 4000 Liège (BE); Hoyoux, Thomas, 4000 Liège (BE); Vounckx, Johan, 3210 Linden (BE); Magera, Floriane, 4450 Slins (BE)
(74) Representative: Rossmanith, Manfred

(56) References cited:
- EP-A2- 2 034 440
- US-A1- 2009 060 352
- SZENBERG F ET AL: "Automatic camera calibration for image sequences of a football match", ADVANCES IN PATTERN RECOGNITION - ICAPR 2001. SECOND INTERNATIONAL CONFERENCE. PROCEEDINGS; RIO DE JANEIRO, BRAZIL; MARCH 11-14, 2001 (LECTURE NOTES IN COMPUTER SCIENCE VOL.2,, vol. 2013, 11 March 2001 (2001-03-11), pages 301 - 310, XP007910926, ISBN: 978-3-540-41767-5
- QIHE LI ET AL: "Automatic Camera Calibration for Images of Soccer Match", WORLD ACADEMY OF SCIENCE, ENGINEERING AND TECHNO,, vol. 1, 1 January 2005 (2005-01-01), pages 170 - 173, XP007910927
- D'ORAZIO ET AL: "A review of vision-based systems for soccer video analysis", PATTERN RECOGNITION, ELSEVIER, GB, vol. 43, no. 8, 1 August 2010 (2010-08-01), pages 2911 - 2926, XP002612059, ISSN: 0031-3203, [retrieved on 20100319], DOI: 10.1016/J.PATCOG.2010.03.009

## Description

### Field

The present disclosure relates to a method for automatically mapping a reference view of a playing field containing field lines with a camera image. The disclosure also relates to an apparatus for implementing the method. The method and apparatus are particularly relevant for live broadcasts.

### Background

In a soccer game an offside situation of an offensive player is an important problem and at the same time it is difficult for linesmen to make a correct decision whether an offensive player is offside or not. The linesman has to check that at the moment when an offensive player forwards the ball no other offensive player is closer to the goal line than the defensive player who is closest to the goal line. Of course the goalkeeper is excluded from this consideration. Apparently, the linesman has to observe simultaneously two or even more players who are very likely moving dynamically during an attack. Among other things the judgment is made complicated by players being obscured by other players or by a parallax error of the linesman if he is not on the same line parallel to the goal line of the closest defensive player. In the context of the present disclosure it is not necessary to elaborate further the difference between active and passive offside situation. It is sufficient to understand that the judgment of offside situations is challenging. The same is true for viewers watching a soccer game on TV because the perspective of the broadcast camera capturing the game is many times not well-suited to verify a potential offside situation. In consequence, viewers watching the game on a TV may judge a potential offside event differently than the linesman and think that the linesman has made a wrong decision. This may cause a lot of frustration on the side of the viewers that might even spoil the joy of watching the soccer game.

In view of this problem and in order to enhance the viewer experience of soccer games it is known to insert offside lines in an image captured by a broadcast camera. The inserted offside line assists a viewer in making his or her own judgment. For example, from EVS broadcast Equipment S.A. a product named EPSIO Live ^{®} is commercially available and enables displaying an offside line in a broadcast image of a soccer game. However, today available products for inserting an offside line require a considerable amount of manual interventions of an operator for inserting the offside line at the right position.

US 2003/0049590 A1 discloses a system for determining the position of all players on a playing field. The system is capable of determining, in real time, from optical data a position of a playing ball and positions of players from an offensive team and from a defensive team. Two surveillance instruments, such as cameras, survey the playing field and are connected to a computer. The computer algorithms identify objects, colors and shapes and thus determine in real time the positions of the ball and the players of the offensive and defensive team.

EP2034440 A2 discloses a method of calculating a transform matrix for transforming points in a model of an object to an image of the object captured by a camera. This method is applied in particular to images of a football match.

US 2009/0060352 A1 describes a method for detecting and classifying offside events in a soccer game. The method builds on ball tracking and detection as well as on determining ball dynamics. In addition to that, players are detected. For implementing the ball tracking feature it is suggested to utilize an artificial neural network, which is trained to recognize the ball. For illustrating a potential off-side position a bar parallel to the goal line is positioned manually by an operator.

Nevertheless, there remains a desire to facilitate the insertion of graphical objects in a broadcast image.

### Summary

According to a first aspect the present disclosure suggests a method for automatically mapping a reference view of a playing field containing field lines with a camera image. The invention is set out in the appended claims.

In general terms, the proposed technique automates the estimation of the homography, which is a kind of geometric transformation between pairs of two-dimensional images. Homography maps a reference view of a sports field, as seen from a given, known a priori, viewpoint (e.g. a "top" view) to images acquired by a camera pointed at the same sport field, and vice-versa. The method is applicable to one or more camera images corresponding to one or more camera views each one covering the complete playing field or only a fraction of the playing field.

The suggested method enables automatically detecting predefined positions on the playing field and thus enables to calculate the geometric transformation of the playing field caused by a specific camera view. This geometric transformation determines the way how an additional auxiliary line like an offside line has to be inserted into the camera image such that the user has the impression that the line is painted on the grass of the playing field. The advantage of the suggested method is that the classification of the predefined positions on the playing field in the calculation of the geometric transformation is performed automatically without human intervention. The operator of a live broadcast covering for example sports events is significantly unburdened by this automatic process.

In most of the ball games there are many intersections of field lines, in particular on a soccer playing field. Therefore, it is a convenient approach to take benefit of the intersections of field lines for determining the geometric transformation. Just for the sake of clarity it is noted that three to five predefined positions are sufficient to calculate a first estimate of the geometric transformation. However, the more predefined positions are taken into account the more precisely the geometric transformation can be calculated.

The detected field lines are very useful for an assessment of the quality of the geometric transformation because a comparison of the detected field lines and calculated field lines enables the assessment of the fidelity of the geometric transformation.

An embodiment takes benefit from having two sets of field lines available and further comprises adapting parameters of the geometric transformation for minimizing the differences between the detected field lines and the calculated field lines. In this way a refinement of the geometric transformation is achievable. Once it is no longer possible to further minimize the differences between the detected field lines and calculated field lines the corresponding parameters set of the geometric transformation is used to calculate the position and orientation of the additional line that is to be inserted into the camera image.

For instance in a soccer game, the inserted line can be an offside line. Since the geometric transformation, which is caused by the camera perspective, is known, it is possible to insert the line such that a viewer in front of a TV screen has the impression that the line is painted on the grass of the playing field. All necessary connections and calculations are performed automatically real-time.

According to a second aspect of the present disclosure an apparatus is suggested for automatic mapping a reference view of a playing field containing field lines with a camera image of a live broadcast production covering a ballgame on a playing field with field lines.

According to a third aspect the present disclosure suggests a software containing program code, which, when executed by a processor, performs a method according to the first aspect of the present disclosure.

### Brief Description of Drawings

Exemplary embodiments of the present disclosure are illustrated in the drawings and are explained in more detail in the following description. In the figures the same or similar elements are referenced with the same or similar reference signs. It shows:
- Fig. 1A: a soccer game playing field in perspective view;
- Fig. 1B: the soccer game playing field of Fig. 1A with an offside line;
- Fig. 1C: the soccer game playing field of Fig. 1A in the top view;
- Fig. 1D: the soccer game playing field of Fig. 1C with an offside line;
- Fig. 2: a schematic block diagram of an apparatus according to the present disclosure;
- Fig. 3A: a soccer game playing field in the top view with predefined positions;
- Fig. 3B: the soccer game playing field of Fig. 3A in a perspective view;
- Fig. 4: a soccer game playing field with detected field lines and calculated field lines
- Fig. 5: a soccer game playing field with an offside line;
- Fig. 6: a control panel for operating the apparatus according to present disclosure;
- Fig. 7: a flow diagram of a method according to the present disclosure;
- Fig. 8: a player trajectory in a top view;
- Fig. 9A: a camera image on a playing field; and
- Fig. 9B: a top view of the camera image of Fig. 9A.

### Description of Embodiments

Reference herein to "one embodiment" or "an embodiment" means that a particular feature, structure, or characteristic described in connection with the embodiment can be included in at least one implementation of the disclosure. The appearances of the phrase "in one embodiment" in various places in the specification are not necessarily all referring to the same embodiment, nor are separate or alternative embodiments necessarily mutually exclusive of other embodiments.

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The embodiments described below comprise separate devices to facilitate the understanding of different functional group of the present disclosure. However, it is to be understood that some devices may very well integrated in a single device.

Most generally speaking the present disclosure relates to mapping of a reference view of a playing field for sports such as soccer, basketball, US football, tennis and others. The reference view is a view on the playing field from a known view point, for instance from a top view. Under a first aspect the present disclosure suggests a method for mapping the reference view to images acquired by a camera pointed at the same sport field, and vice-versa. The mapping permits to determine an estimate for a geometric transformation also known as homography between the pairs of the two dimensional images, namely the reference view and the camera image. Once the geometric transformation is known, it enables the insertion of graphical objects into the camera image in compliance with the perspective of the camera view, e.g. it is possible to display an offside line in a soccer game, player trajectories, advertising, scoreboard, etc. as if these objects were "painted on the grass" of the playing field.

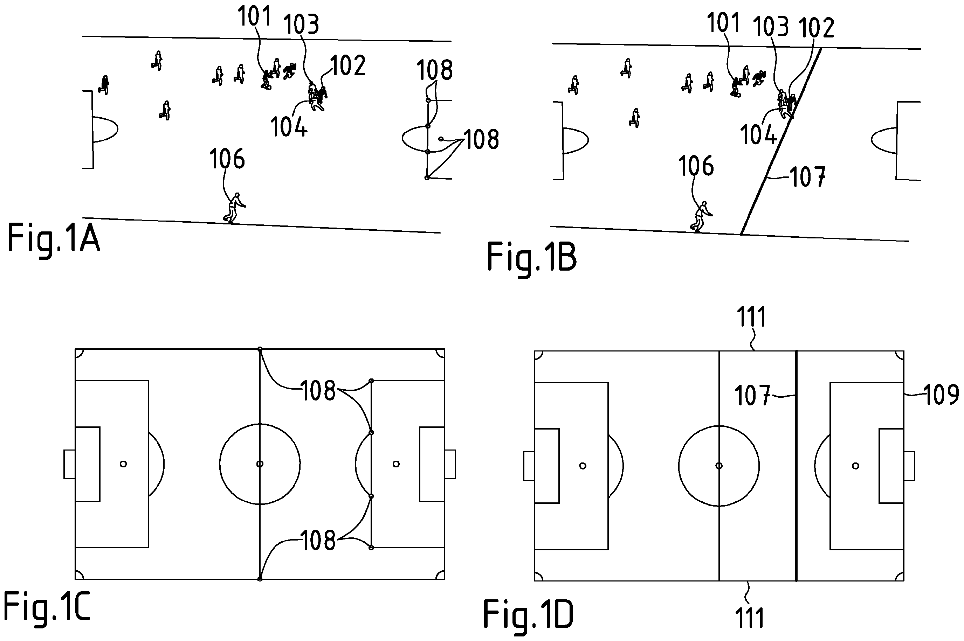

The principles of the method are are explained with reference to Figures 1A to 1D.

In Fig. 1A an attack situation of a soccer team is shown. The goal of the defensive team is on the right side in Fig. 1A. An offensive player 101 just has the ball in the situation shown in Fig. 1A. A second attacking player 102 is marked by two defenders 103, 104. From the view shown in Fig. 1A it is difficult to say whether this second attacking player 102 is offside or not, i.e. whether he is closer to the goal line of the defensive team than any other defender with the exception of the goalkeeper of the defensive team. In the foreground of Fig. 1A a linesman 106 runs together with the defender 104, who is closest to the goal line, in order to be able to identify an offside situation. The linesman tries to be on the same level as the defender 104 with regard to the goal line to have a view on the position of the defender which is not falsified by a parallax error. If the linesman 106 falls behind the position of the defender 104 or advances with regard to that position there is a risk that the linesmen makes an erroneous decision.

For viewers watching the game on the television screen it is even more difficult to make a correct judgment of a potential offside event. If, for instance, the linesman decides differently than what the viewers have seen on the TV screen this may cause frustration on the side of the viewers and even spoil the joy of watching the game. In order to assist the viewers, a line is inserted between offside and fair play. The line is shown as a straight line 107 in Fig. 1B. The offside line 107 is displayed on a screen of a TV as if it was painted on the grass of the playing field. It is not straightforward to achieve this effect because the vanishing point of the camera image depends on the perspective of the camera on the playing field. In other words: In the camera image the playing field and the field lines thereon undergo geometric transformation that per se is not known but must be extracted from the camera image itself. To this end an operator selects some locations on the playing field e.g. intersections of field lines. In Fig. 1A some of the locations are shown as circles 108. He then identifies the corresponding locations in a top view of the playing field that is shown in Fig. 1C. With this information the applicable geometric transformation can be calculated and an offside line can be manually inserted into the camera image. The line complies with the geometric transformation and is properly displayed on the grass as the line 107 parallel to the goal line. This can be seen best in the top view shown in Fig. 1D where the line 107 is parallel to the goal line 109 and perpendicular to side lines 111. With reference to Fig. 1B it is evident that such an offside line is very instrumental to the viewer to make his own decision about an offside situation.

From the description of the conventional approach for creating an offside line it becomes evident that this process requires a lot of manual interventions by the operator who is already loaded with other tasks involved in the preparation of an image that is eventually going on air. Loading the operator with the additional task of inserting an offside line brings on a considerable risk that the broadcast operator gets overloaded and the program output signal going on air is compromised in one way or another.

The present disclosure, therefore, aims at replacing manual interventions by automatic processes when inserting an offside line in the camera image.

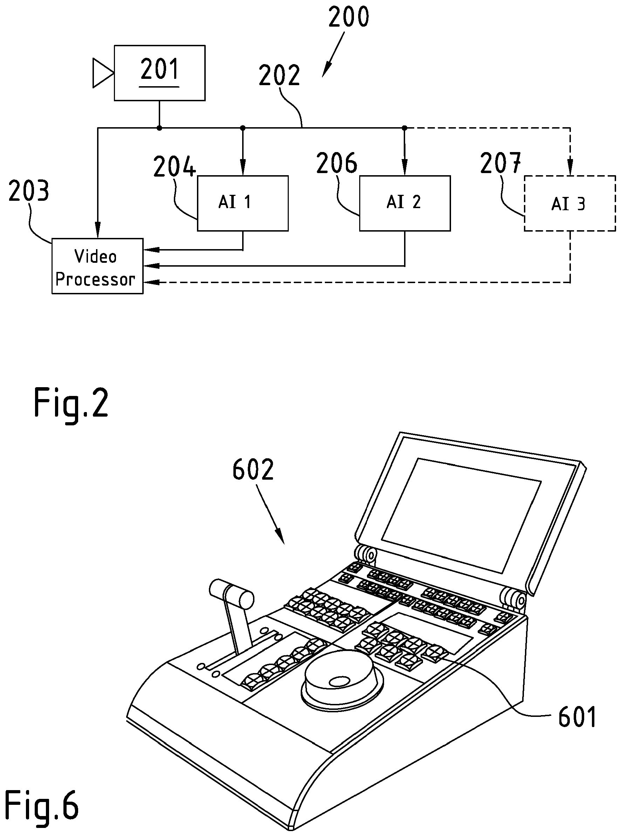

Fig. 2 shows a block diagram of an apparatus 200 for achieving this goal. A camera 201 captures images in a football stadium. For the sake of simplicity only a single camera 201 is shown in Fig. 2. But in reality, there are for example 8 to 16 cameras distributed around the playing field to make sure that there is always one camera that has a good shot at an interesting scene anywhere on the playing field. The camera images of multiple cameras are processed in parallel.

The camera 201 feeds the image data into a data connection 202 that transmits the data to a video processor 203, a first neural network (AI1) 204 and a second neural network (AI2) 206. The block diagram is a simplification of the broadcast equipment for producing life broadcast programs. The broadcast equipment may also include storage devices, routers, digital video effect devices, character generators etc. All these devices are not shown in Fig. 2 because they are not relevant to understand the present disclosure. The data connection 202 transmits the image frames from the camera 201 in synchronized fashion to the video processor 203 and to neural networks 204 and 206, i.e. every image frame arrives at the same time at all three devices.

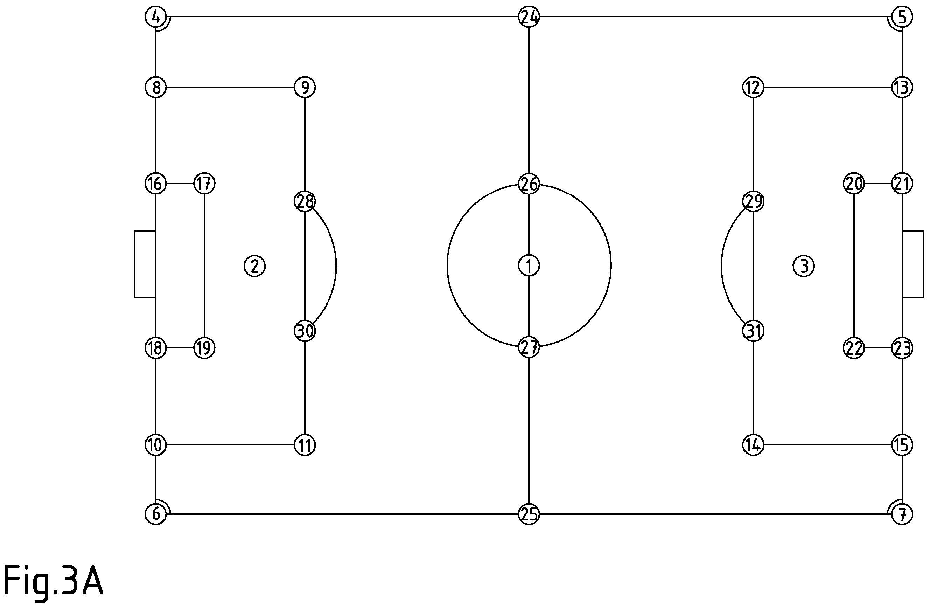

The first neural network 204 automatically classifies each pixel of the camera image into a plurality of classes, wherein the classes correspond to predefined locations on the playing field. In one embodiment of the present disclosure the predefined locations are intersections of field lines on the playing field. Fig. 3A shows intersections of field lines on a soccer field. Each intersection is marked with a circle having an index number 1 to 31 in the circle.

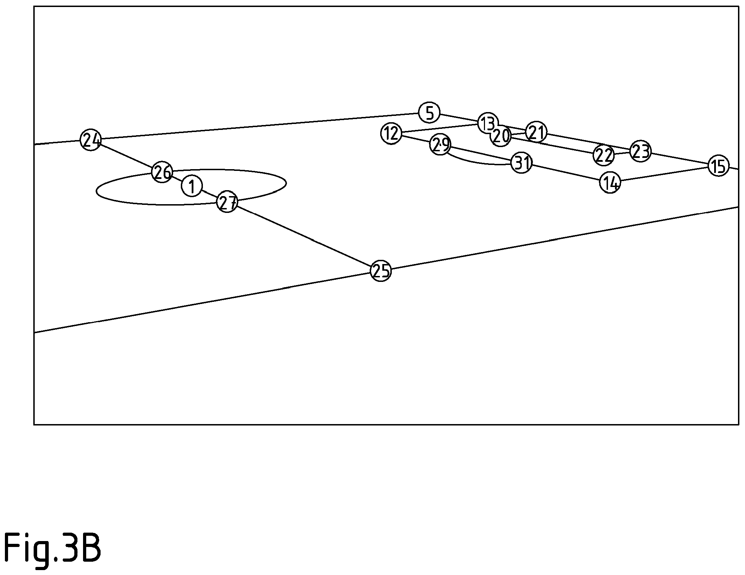

The first neural network 204 has been trained to detect corresponding locations in the camera image as it is shown in Fig. 3B. The first neural network 204 generates for each pixel in the camera image a triplet composed of the geometric position of the pixel in the image and a class identifying whether the pixel corresponds to one of the predefined locations: (x,y,class). These triplets are output to the video processor 203 which calculates a first estimate of a geometric transformation that transforms the top view of the playing field into the playing field captured by the camera. The known geometric transformation enables the video processor 203 to calculate field lines in the camera image.

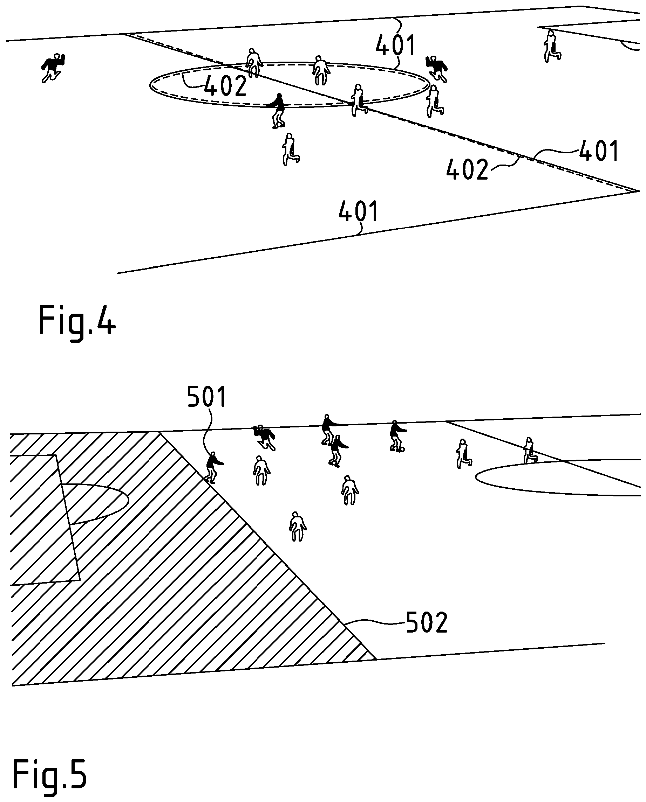

The second neural network 206 has been trained to detect the field lines in the camera image and outputs the coordinates of the field lines to the video processor 203. The result is shown in Fig. 4 as a composite image where field lines captured by the camera 201 are shown as solid lines 401 and the field lines calculated according to the first estimate of the geometric transition are shown as dashed lines 402. As it can be seen from Fig. 4 there are deviations between the field lines 401 and 402. For better illustration the deviations are exaggerated, i.e. in reality the deviations are smaller.

The video processor 203 compares the positions of the detected field 401 lines in the camera image with the calculated field lines 402 and refines the geometric transformation to minimize the differences and/or deviations between the two sets of field lines.

The geometric transformation has eight degrees of freedom (parameters). Finding a refined geometric transformation consists in finding the set of parameter values that causes the calculated lines 402 in the composite image to overlap as good as possible the field lines 401 detected by neural network 206. According to the approach of the present disclosure the first estimate mentioned above is used as a starting point. Subsequently, the 8-dimensional parameter space is explored. This exploration is conducted in an iterative fashion. At each iteration one parameter in the parameter space is incremented. At each iteration, a step of fixed (given) extent in the 8-dimensional parameter space is made. The orientation chosen for this step is the one that increases the most the overlap between the calculated field lines 402 and the detected field lines 401. This process stops when it is no longer possible to make a step that increases the overlap. Such procedure is known in the literature as "iterative gradient descent".

Finally, the offside line is computed and inserted into the camera image by the video processor 203 using the refined geometric transformation. In this embodiment the offside line is still manually positioned by an operator, because the operator decides at which distance from the goal line of the defensive team the offside line 107 is drawn in the camera image. However, all preparation steps enabling generating an offside line in the correct perspective for each camera image is performed automatically. In fact commercially available processors are fast enough to perform all necessary computations in real time for example within 2 ms, which is the equivalent of processing 500 frames per second. For each and every frame the correct geometric transformation is available in real time and an offside line can be inserted into each camera frame in compliance with the right perspective. The only remaining task for the operator is to position the offside line.

In a further embodiment of the present disclosure the operator is also unburdened from positioning the offside line.

The component that is required to perform this additional functionality is shown in the block diagram in Fig. 2 with dashed lines. A third neural network 207 (AI3) receives the camera images in synchronicity like the neural networks 204, 206. The neural network 207 is trained for detecting players on the playing field. This includes distinguishing the players of the two teams and their respective positions. Therefore, the neural network 207 is capable of detecting the position of the defence player who is closest to the goal line of his team. The position data is output as coordinates of the camera image to the video processor 203. The video processor 203 utilizes this information to position the offside line as illustrated in Fig. 5. The defence player who is closest to the goal line of his team is referenced as 501. The hatched area on the left side of line 502 in Fig. 5 indicates the offside in the moment of the game shown in Fig. 5. Consequently, at any moment the right position and perspective of the offside line is available in real-time and can be inserted into every camera image frame. However, the offside line is only interesting in some scenes of the game and rather disturbing during other scenes. Therefore, in one embodiment the operator controls the insertion of the offside line by activating a button 601 on a control panel 602 shown in Fig. 6 without the need to provide any further inputs because the video processor 203 of apparatus 200 has already all necessary information to position and orient the offside line such that the viewer gets the desired impression that the offside line is drawn on the grass of the playing field.

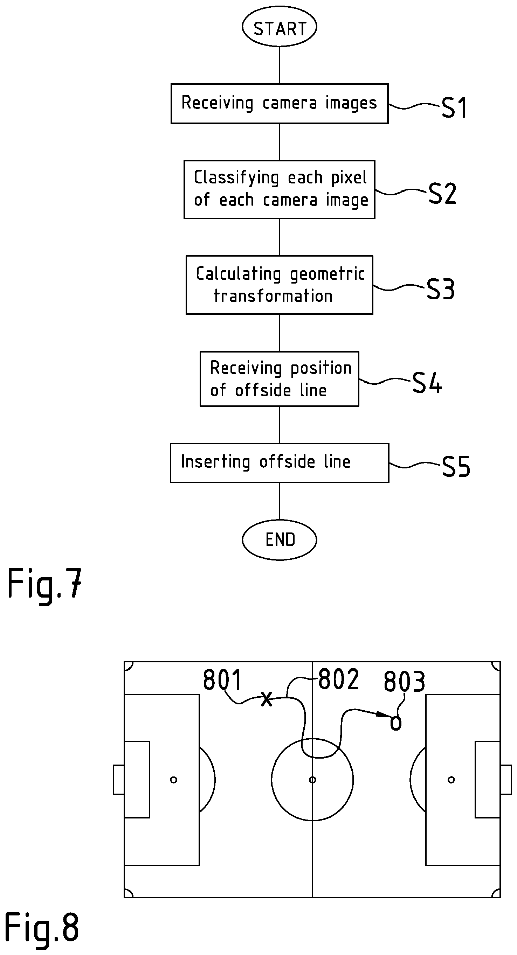

Fig. 7 exhibits a flow diagram illustrating the steps of the method according to the present disclosure. In step S1 camera images are received and transmitted via a data connection or network 202. In step S2 a neural network 204 classifies each pixel of each camera image to determine whether the pixel belongs to a predefined position such as an intersection of field lines on a playing field. The result of processing step S2 is a data triplet containing the geometric position of the pixel in the camera image and the corresponding class information. The data triplet is provided to a video processor 203 that uses in step S3 the data triplet to calculate the geometric transformation which is associated with the camera perspective capturing the playing field. In step S4 the video processor 203 receives information about a position of the offside line. In one embodiment the information is provided as manual input by an operator. In another embodiment the information about the position of the offside line is automatically determined or by the neural network 207, which automatically determines the positions of all players on the playing field. Thus, the neural network 207 can easily detect an offside position by applying a simple rule. In either case the video processor 203 uses the information about the position of the offside line to insert the offside line 107 at the right position into the camera image in compliance with the camera perspective. The user gets the impression that the offside line is drawn with paint on the grass of the playing field.

The offside line is only exemplary for other graphical objects, which are inserted into the camera image and which are of interest to the viewer such as player trajectories, player names, advertising, scoreboard, etc.

In its most general implementation the method according to the present disclosure only performs steps S1 to S3, i.e. calculates the geometric transformation to make it available for other purposes as it is explained in greater detail further below.

As mentioned above, the method of the present disclosure, and more particularly the geometric transformation works in both directions between the reference view and the camera image, i.e. it is possible to map a position in a camera image with the corresponding position in the reference view. This aspect is interesting e.g. for live broadcasts of sports events when a plurality of cameras are installed in a stadium. Obviously, the cameras have different views on the scenes on the playing field. It occurs that in an important scene a single camera image does not display all key players but only in two or more camera images shot by different cameras having different views or perspectives on the playing field. The suggested method allows reconciling observations made by multiple cameras pointed at the same event by projecting all of camera images on the reference view. The reference view represents a single tactical view including the position of players, balls etc. The projection is performed by video processor.

This feature is particularly useful for an automated player detection system. The neural network 207 is capable of tracking all players on the playing field in the received camera images. The video processor 203 receives this information and is provided with an automated player detection functionality, which is configured to indicate the positions of all players in the reference view. Thus, the apparatus 200 also implements an automated player detection system.

The output of the automated player detection system is displayed in Fig. 8 showing a top view on the playing field. A starting point of a player at the beginning of the important scene is indicated with a cross 801. A line 802 shows the trajectory of the player to an end point 803 of the player at the end of the important scene. For the sake of clarity only the trajectory of a single player is shown in Fig. 8. However, the operator can select on the control panel 602 additional players if he finds their trajectories are also interesting for analysing the important scene.

It is to be noted that a reverse transformation, i.e. from the reference or tactical view into a camera view or camera image is equally feasible. Hence, any information that is easily represented in the tactical view (e.g. the offside line) can be automatically represented in the original camera view.

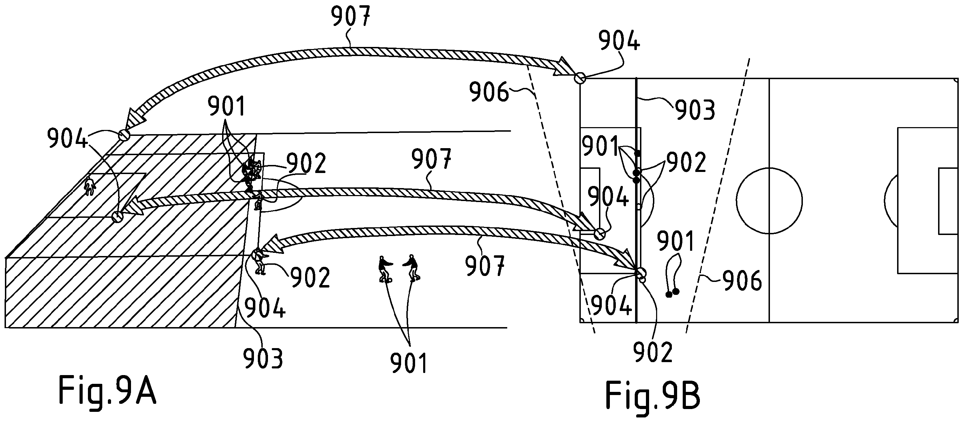

In Figures 9A and 9B illustrate the reversibility of the geometric transformation. Fig. 9A shows a camera image or camera view on a playing field. Fig. 9A displays players 901 of an offensive team, players of a defensive team 902, an offside line 903 and some predefined locations 904.

Fig. 9B shows a top view or tactical view corresponding to the camera view of Fig. 9A. The positions of the players 901, 902, the offside line 903 and the predefined locations 904 are shown at their corresponding positions in the top view. Lines 906 visualize the aperture of a camera that has taken the image shown in Fig. 9A. Arrows 907 symbolize the reversible geometric transition between the views. The offside line 903 is an example of a graphical object that can easily be positioned in the top view in Fig. 9B. From there it is transferred in the right perspective into the camera image shown in Fig. 9A. At the same time the operator can check if graphical objects to be inserted into the camera view are obstructed by players. If necessary, he can move the graphical object to a better suited position.

Generally speaking, the method and apparatus of the present disclosure enable augmented reality in live broadcasts, in particular in live broadcasts of sports events.

Individual components or functionalities of the present disclosure are described in the exemplary embodiments as software or hardware solution. This does not mean, however, that a functionality described as a software solution cannot be implemented in hardware as well, and vice versa. Likewise, mixing solutions are also conceivable for one skilled in the art, in which components and functionalities are partially implemented in software and hardware at the same time.

In the claims, the word "comprise" does not include other elements or steps, and the undefined article "a" does not exclude a plurality.

A single unit or device may perform the functions of several elements set forth in the claims. The fact that individual functions and elements are listed in different dependent claims does not mean that a combination of these functions and elements could not be used advantageously.

### Reference Signs List

| | | | |
|---|---|---|---|
| 101 | offensive player | 901 | offensive player |
| 102 | second offensive player | 902 | defensive player |
| 103, 104 | defenders | 903 | offside line |
| 106 | lines man | 904 | predefined locations |
| 107 | offside line | 906 | lines (aperture) |
| 108 | selected locations | 907 | arrows |
| 109 | goal line | | |
| 111 | side line | | |
| 200 | apparatus | | |
| 201 | camera | | |
| 202 | data connection | | |
| 203 | video processor | | |
| 204 | first neural network | | |
| 206 | second neural network | | |
| 207 | third neural network | | |
| 401 | detected field lines | | |
| 402 | calculated field lines | | |
| 501 | defense player | | |
| 502 | offside line | | |
| 601 | control button | | |
| 602 | control panel | | |
| 801 | starting point | | |
| 802 | trajectory | | |
| 803 | end point | | |
| S1 to S6 | method steps | | |

## Claims

1. Method for automatically mapping a reference view of a playing field containing field lines with a camera image, wherein the method comprises
- determining in the reference view predefined locations on the playing field;
- receiving the camera image from a camera (201);
- classifying intersections of the field lines with a first neural network (204) at predefined positions on the playing field for automatically classifying each pixel of the camera image into a plurality of classes, wherein the classes correspond to the predefined locations in the reference view on the playing field;
- detecting the field lines (401) in the camera image with a second neural network (206);
- receiving the output of the first neural network (204) and a known geometry of the playing field and the field lines thereon for calculating a geometric transformation defining how the geometry of the playing field is transformed by the perspective of the camera image and for calculating field lines in the camera view;
- refining the geometric transformation by minimizing deviations between the calculated field lines and the detected field lines;
- detecting positions of players and distinguishing their respective teams with a third neural network (207);
- automatically positioning an offside line (502) in the camera image by using the refined geometric transformation according to the detected position of one of the players (501), wherein the offside line is displayable in the camera image.

2. Method according to claim 1 further comprising
inserting the offside line (107; 502; 903) into the camera image in compliance with the calculated geometric transformation.

3. Method according to claim 1 or 2 further comprising
- calculating field lines (402) based on the geometric transformation;
- inserting the calculated field (402) lines into the camera image; and
- adapting parameters of the geometric transformation for minimizing the differences between the detected field lines (401) and the calculated field lines (402).

4. Method according to one of the preceding claims further comprising
- applying the geometric transformation to one or several camera images to map the one or a plurality of camera images on the reference view of the playing field.

5. Method according to claim 4 further comprising
- indicating starting point (801), end point (803) and/or trajectory (802) of a selected player in the reference view of the playing field.

6. Apparatus for automatic mapping a reference view of a playing field containing field lines with a camera image of a live broadcast production covering a ballgame on a playing field with field lines, wherein the apparatus comprises
- a first neural network (204) implemented in the apparatus and being trained for automatically classifying each pixel of the camera image into a plurality of classes, wherein the classes correspond to predefined locations in the reference view of the playing field, wherein the first neural network (204) generates an output identifying a location of each pixel in the camera image and to which class it belongs;
- a video processor (203) receiving the output of the first neural network (204) and a known geometry of the playing field and the field lines thereon, wherein the video processor (203) is arranged for calculating a geometric transformation defining how the geometry of the playing field is transformed by the perspective of the camera image and for calculating field lines in the camera view;
- a second neural network (206) implemented in the apparatus and being trained for automatically detecting the field lines (401) in the camera image; classifying intersections of the field lines in the camera image as predefined positions on the playing field; and outputting the positions of the detected field lines to the video processor (203);
- the video processor (203) is configured to minimize the differences between the calculated field lines (402) and the detected field lines (401) by adapting parameters of the geometric transformation to achieve a refined geometric transformation;
- a third neural network (207) implemented in the apparatus and being trained for automatically detecting positions of players on the playing field and distinguishing their respective teams; wherein
- the video processor (203) is arranged for generating an offside line (107, 502) in the camera image according to the detected position of one of the players (501) and in compliance with the refined geometric transformation; and wherein the video processor (203) generates an output image composed the camera image and the offside line.

7. Apparatus according to claim 6, wherein the video processor (203) is configured to automatically position the offside line (107, 502) and to insert it into the camera image according to the detected position of one of the players (501).

8. Apparatus according to claim 6 or 7, wherein the apparatus comprises a control element (701) for activating the automatic insertion of the line (502) into the camera image.

9. Software containing program code, which, when executed by a processor, performs a method according to claims 1 to 5.

## Patentansprüche

1. Verfahren zum automatischen Abbilden einer Referenzansicht eines Spielfelds, das Feldlinien enthält, mit einem Kamerabild, wobei das Verfahren umfasst:
- Bestimmen im Voraus definierter Orte auf dem Spielfeld in der Referenzansicht;
- Empfangen des Kamerabilds von einer Kamera (201);
- Klassifizieren von Schnittpunkten der Feldlinien mit einem ersten neuronalen Netz (204) an im Voraus definierten Positionen auf dem Spielfeld, um automatisch jedes Pixel des Kamerabilds in mehrere Klassen zu klassifizieren, wobei die Klassen den im Voraus definierten Orten in der Referenzansicht auf dem Spielfeld entsprechen;
- Detektieren der Feldlinien (401) in dem Kamerabild mit einem zweiten neuronalen Netz (206);
- Empfangen der Ausgabe des ersten neuronalen Netzes (204) und einer bekannten Geometrie des Spielfelds und der Feldlinien darauf, um eine geometrische Transformation zu berechnen, die definiert, wie die Geometrie des Spielfelds durch die Perspektive des Kamerabilds transformiert wird, und um Feldlinien in der Kameraansicht zu berechnen;
- Verfeinern der geometrischen Transformation durch Minimieren von Abweichungen zwischen den berechneten Feldlinien und den detektierten Feldlinien;
- Detektieren von Positionen von Spielern und Unterscheiden ihrer jeweiligen Mannschaften mit einem dritten neuronalen Netz (207);
- automatisches Positionieren einer Abseitslinie (502) in dem Kamerabild unter Verwendung der verfeinerten geometrischen Transformation in Übereinstimmung mit der detektierten Position eines der Spieler (501), wobei die Abseitslinie in dem Kamerabild angezeigt werden kann.

2. Verfahren nach Anspruch 1, das ferner umfasst:
Einfügen der Abseitslinie (107; 502; 903) in das Kamerabild gemäß der berechneten geometrischen Transformation.

3. Verfahren nach Anspruch 1 oder 2, das ferner umfasst:
- Berechnen von Feldlinien (402) auf der Grundlage der geometrischen Transformation;
- Einfügen der berechneten Feldlinien (402) in das Kamerabild; und
- Anpassen von Parametern der geometrischen Transformation zum Minimieren der Unterschiede zwischen den detektierten Feldlinien (401) und den berechneten Feldlinien (402).

4. Verfahren nach einem der vorhergehenden Ansprüche, das ferner umfasst:
- Anwenden der geometrischen Transformation auf ein oder mehrere Kamerabilder, um das eine oder mehrere Kamerabilder auf die Referenzansicht des Spielfelds abzubilden.

5. Verfahren nach Anspruch 4, das ferner umfasst:
- Angeben eines Anfangspunkts (801), eines Endpunkts (803) und/oder einer Bewegungsbahn (802) eines ausgewählten Spielers in der Referenzansicht des Spielfelds.

6. Vorrichtung zum automatischen Abbilden einer Referenzansicht eines Spielfelds, das Feldlinien enthält, mit einem Kamerabild einer Livesendungsproduktion, die von einem Ballspiel auf einem Spielfeld mit Feldlinien berichtet, wobei die Vorrichtung umfasst:
- ein erstes neuronales Netz (204), das in der Vorrichtung implementiert wird und das zum automatischen Klassifizieren jedes Pixels des Kamerabilds in mehrere Klassen trainiert wird, wobei die Klassen im Voraus definierten Orten in der Referenzansicht des Spielfelds entsprechen, wobei das erste neuronale Netz (204) eine Ausgabe erzeugt, die einen Ort jedes Pixels in dem Kamerabild und zu welcher Klasse es gehört, identifiziert;
- einen Videoprozessor (203), der die Ausgabe des ersten neuronalen Netzes (204) und eine bekannte Geometrie des Spielfelds und der Feldlinien darauf empfängt, wobei der Videoprozessor (203) zum Berechnen einer geometrischen Transformation, die definiert, wie die Geometrie des Spielfelds durch die Perspektive des Kamerabilds transformiert wird, und zum Berechnen von Feldlinien in der Kameraansicht ausgelegt ist;
- ein zweites neuronales Netz (206), das in der Vorrichtung implementiert wird und das zum automatischen Detektieren der Feldlinien (401) in dem Kamerabild; zum Klassifizieren von Schnittpunkten der Feldlinien in dem Kamerabild als im Voraus definierte Positionen auf dem Spielfeld; und zum Ausgeben der Positionen der detektierten Feldlinien an den Videoprozessor (203) trainiert wird;
- wobei der Videoprozessor (203) zum Minimieren der Unterschiede zwischen den berechneten Feldlinien (402) und den detektierten Feldlinien (401) durch Anpassen von Parametern der geometrischen Transformation, um eine verfeinerte geometrische Transformation zu erzielen, konfiguriert ist;
- ein drittes neuronales Netz (207), das in der Vorrichtung implementiert wird und das zum automatischen Detektieren von Positionen von Spielern auf dem Spielfeld und zum Unterscheiden ihrer jeweiligen Mannschaften trainiert wird; wobei
- der Videoprozessor (203) zum Erzeugen einer Abseitslinie (107, 502) in dem Kamerabild in Übereinstimmung mit der detektierten Position eines der Spieler (501) und gemäß der verfeinerten geometrischen Transformation ausgelegt ist; und wobei der Videoprozessor (203) ein Ausgangsbild erzeugt, in dem das Kamerabild und die Abseitslinie zusammengesetzt sind.

7. Vorrichtung nach Anspruch 6, wobei der Videoprozessor (203) zum automatischen Positionieren der Abseitslinie (107, 502) und zu ihrem Einfügen in das Kamerabild in Übereinstimmung mit der detektierten Position eines der Spieler (501) konfiguriert ist.

8. Vorrichtung nach Anspruch 6 oder 7, wobei die Vorrichtung ein Steuerelement (701) zum Aktivieren des automatischen Einfügens der Linie (502) in das Kamerabild umfasst.

9. Software, die Programmcode enthält, der, wenn er durch einen Prozessor ausgeführt wird, ein Verfahren nach den Ansprüchen 1 bis 5 ausführt.

## Revendications

1. Procédé de cartographie automatique d'une vue de référence d'un terrain de jeu contenant des lignes de terrain avec une image de caméra, le procédé consistant à
- déterminer dans la vue de référence des emplacements prédéfinis sur le terrain de jeu ;
- recevoir l'image d'une caméra (201) ;
- classer les intersections des lignes de terrain à l'aide d'un premier réseau neuronal (204) à des emplacements prédéfinis sur le terrain de jeu pour classer automatiquement chaque pixel de l'image de caméra dans une pluralité de classes, les classes correspondant aux emplacements prédéfinis dans la vue de référence sur le terrain de jeu ;
- détecter les lignes de terrain (401) dans l'image de caméra à l'aide d'un deuxième réseau neuronal (206) ;
- recevoir la sortie du premier réseau neuronal (204) et une géométrie connue du terrain de jeu et des lignes de terrain sur celui-ci pour calculer une transformation géométrique définissant comment la géométrie du terrain de jeu est transformée par la perspective de l'image de caméra et pour calculer les lignes de terrain dans la vue de la caméra ;
- affiner la transformation géométrique en minimisant les écarts entre les lignes de terrain calculées et les lignes de terrain détectées ;
- détecter les positions des joueurs et distinguer leurs équipes respectives à l'aide d'un troisième réseau neuronal (207) ;
- positionner automatiquement une ligne de hors-jeu (502) dans l'image de caméra en utilisant la transformation géométrique affinée en fonction de la position détectée de l'un des joueurs (501), la ligne de hors-jeu pouvant être affichée dans l'image de caméra.

2. Procédé selon la revendication 1 comprenant en outre
- l'insertion de la ligne de hors-jeu (107 ; 502 ; 903) dans l'image de caméra conformément à la transformation géométrique calculée.

3. Procédé selon la revendication 1 ou 2 comprenant en outre
- le calcul des lignes de terrain (402) sur la base de la transformation géométrique ;
- l'insertion des lignes de terrain calculées (402) dans l'image de caméra ;
et
- l'adaptation des paramètres de la transformation géométrique pour minimiser les différences entre les lignes de terrain détectées (401) et les lignes de terrain calculées (402).

4. Procédé selon l'une des revendications précédentes comprenant en outre
- l'application de la transformation géométrique à une ou plusieurs images de caméra pour cartographier une ou plusieurs images de caméra sur la vue de référence du terrain de jeu.

5. Procédé selon la revendication 4 comprenant en outre
- l'indication du point de départ (801), du point d'arrivée (803) et/ou de la trajectoire (802) d'un joueur sélectionné dans la vue de référence du terrain de jeu.

6. Appareil permettant la cartographie automatique d'une vue de référence d'un terrain de jeu contenant des lignes de terrain avec une image de caméra d'une production de diffusion en direct couvrant un match de football sur un terrain de jeu avec des lignes de terrain, l'appareil comprenant
- un premier réseau neuronal (204) mis en oeuvre dans l'appareil et entraîné pour classer automatiquement chaque pixel de l'image de caméra dans une pluralité de classes, les classes correspondant à des emplacements prédéfinis dans la vue de référence du terrain de jeu, le premier réseau neuronal (204) générant une sortie identifiant un emplacement de chaque pixel dans l'image de caméra et la classe à laquelle il appartient ;
- un processeur vidéo (203) recevant la sortie du premier réseau neuronal (204) et une géométrie connue du terrain de jeu et des lignes de terrain sur celui-ci, le processeur vidéo (203) étant conçu pour calculer une transformation géométrique définissant la façon dont la géométrie du terrain de jeu est transformée par la perspective de l'image de caméra et pour calculer les lignes de terrain dans la vue de la caméra ;
- un deuxième réseau neuronal (206) mis en oeuvre dans l'appareil et entraîné pour détecter automatiquement les lignes de terrain (401) dans l'image de caméra ; classer les intersections des lignes de terrain dans l'image de caméra comme des positions prédéfinies sur le terrain de jeu ; et transmettre les positions des lignes de terrain détectées au processeur vidéo (203) ;
- le processeur vidéo (203) étant configuré pour minimiser les différences entre les lignes de terrain calculées (402) et les lignes de terrain détectées (401) en adaptant les paramètres de la transformation géométrique pour obtenir une transformation géométrique affinée ;
- un troisième réseau neuronal (207) mis en oeuvre dans l'appareil et entraîné pour détecter automatiquement les positions des joueurs sur le terrain de jeu et distinguer leurs équipes respectives ;
- le processeur vidéo (203) étant conçu pour générer une ligne de hors-jeu (107, 502) dans l'image de caméra en fonction de la position détectée de l'un des joueurs (501) et conformément à la transformation géométrique affinée ; et le processeur vidéo (203) générant une image de sortie composée de l'image de caméra et de la ligne de hors-j eu.

7. Appareil selon la revendication 6, le processeur vidéo (203) étant configuré pour positionner automatiquement la ligne de hors-jeu (107, 502) et l'insérer dans l'image de caméra en fonction de la position détectée de l'un des joueurs (501).

8. Appareil selon la revendication 6 ou 7, l'appareil comprenant un élément de commande (701) pour activer l'insertion automatique de la ligne (502) dans l'image de caméra.

9. Logiciel contenant un code de programme qui, lorsqu'il est exécuté par un processeur, met en oeuvre un procédé selon les revendications 1 à 5.
